(19) Europäisches Patentamt

European Patent Office

Office européen des brevets

(11) **EP 0 744 679 B1**

(12) **FASCICULE DE BREVET EUROPEEN**

(45) Date de publication et mention
de la délivrance du brevet:
**15.03.2000 Bulletin 2000/11**

(51) Int Cl.⁷: **G05B 19/42**

(21) Numéro de dépôt: **96401111.8**

(22) Date de dépôt: **22.05.1996**

(54) **Procédé de commande électronique d'ouverture et/ou de fermeture d'une porte et dispositif pour sa mise en oeuvre**

Elektronisches Steuerungsverfahren zum Öffnen und/oder Schliessen einer Tür und Gerät dafür

Door opening and/or closing electronic control method and means therefor

(84) Etats contractants désignés:
**AT DE NL**

(30) Priorité: **22.05.1995 FR 9506034**

(43) Date de publication de la demande:
**27.11.1996 Bulletin 1996/48**

(73) Titulaire: **FAIVELEY TRANSPORT
93200 Saint-Denis (FR)**

(72) Inventeur: **Llerena, Laurent Pierre Edouard
37550 Saint Avertin (FR)**

(74) Mandataire: **Derambure, Christian
Bouju Derambure Bugnion,
52, rue de Monceau
75008 Paris (FR)**

(56) Documents cités:
**EP-A- 0 415 655          EP-A- 0 578 062
GB-A- 2 221 769          US-A- 4 578 763**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé de commande électronique d'ouverture et/ou de fermeture d'une porte par l'intermédiaire d'un moteur à courant continu, un dispositif pour la mise en oeuvre d'un tel procédé, ainsi qu'une porte comportant un tel dispositif.

l'invention s'applique plus particulièrement à des procédés et dispositifs de commande pour des portes électriques de matériel ferroviaire roulant ou portes pallières pour station de métro. Mais elle peut s'appliquer à d'autres types de portes, tels que les portes d'ascenceur ou de parking par exemple, dès lors qu'elles présentent une structure dans laquelle le mouvement de la porte est commandé par l'intermédiaire d'un moteur à courant continu en régulant la vitesse et le couple du moteur en fonction de la position de la porte.

On connaît des dispositifs de commande électronique d'ouverture et/ou de fermeture d'une porte par l'intermédiaire d'un moteur à courant continu. D'une manière générale, ces dispositifs permettent de procéder à la commande électronique de la porte de la manière suivante :

- on détermine une position instantanée de la porte par l'intermédiaire soit d'un détecteur électromécanique, soit d'un codeur optique monté sur l'arbre du moteur, et
- on régule la tension aux bornes du moteur à courant continu ou le courant parcourant les enroulements du moteur en fonction de la position instantanée déterminée.

Dans le cas d'un détecteur électromécanique, le détecteur fournit un signal correspondant au passage de la porte dans une position prédéterminée. La mesure de la position est donc simple car elle ne nécessite pas de calcul. Cependant ce type de dispositif ne fournit que des positions prédéterminées de la porte suivant un gabarit préétabli et un changement de ce gabarit signifie une modification complexe car elle correspond à une action mécanique sur le détecteur.

S'agissant du codeur optique, son utilisation ne nécessite pas de manipulation particulière et, comme il ne comporte que peu de parties mécaniques, le dispositif reste beaucoup plus fiable. Cependant, il correspond en fait à un détecteur élaboré, dans la mesure où les informations qu'il fournit nécessite un traitement de données ultérieur pour obtenir des informations équivalentes à celle du détecteur. C'est en fait un dispositif qui coûte relativement cher, qui donne une information très précise, qui n'est pas toujours indispensable dans des utilisations telles que la commande de portes.

L'état de la technique en matière de commande de moteur électrique est également illustré par les documents suivants :

Le brevet américain US-4 378 517 concerne un procédé et un dispositif pour le contrôle de la commande en énergie d'un moteur électrique. Cependant, ce dispositif utilise un tachymètre pour mesurer la vitesse du moteur, ce qui nécessite un élément électromécanique supplémentaire susceptible d'apporter des erreurs de précision dans la mesure et qui n'améliore pas la fiabilité du dispositif.

Les brevets américains US-4 779 031 et US-5 033 088 concernent un système à servo-moteur (moteur-commande-capteur) dans lequel il s'agit de redéfinir tous ses éléments pour rendre le système plus robuste, plus compact et plus fiable. Cependant, ce dispositif nécessite l'utilisation d'un codeur pour calculer la position et la vitesse, ce qui implique un élément électromécanique supplémentaire.

Le brevet américain US-5 093 892 concerne un système de commande de la vitesse d'un moteur. Ce dispositif est utilisé essentiellement pour la commande de moteur de machine à coudre pour faire face aux variations de charge. Là encore, la vitesse réelle de rotation du moteur est mesurée par un capteur.

L'ensemble de ces dispositifs présente donc l'inconvénient de nécessiter la présence d'un élément supplémentaire tel qu'un détecteur ou un capteur pour effectuer une commande par moteur électrique à courant continu, au détriment d'une bonne fiabilité et d'un coût plus important. En outre, ces dispositifs permettent une détection d'une précision nettement supérieure à ce qui est nécessaire dans le cadre de la commande de porte.

L'invention vise donc à pallier ces inconvénients.

Elle a pour objet un procédé de commande électronique d'ouverture et/ou de fermeture d'une porte par l'intermédiaire d'un moteur à courant continu plus simple, nécessitant moins d'éléments de mesure de manière à diminuer les risques de panne et permettant ainsi d'être moins encombrant, et ce en obtenant une moins bonne précision, qui, dans l'application de la commande de porte n'est pas nécessaire.

Elle a en outre pour objet un dispositif permettant la mise en oeuvre d'un tel procédé qui puisse être adaptable et réglable en matière de prédétermination de position, beaucoup plus facilement que les systèmes existant.

A cet effet, l'invention propose un procédé de commande électronique d'ouverture et/ou de fermeture d'une porte par l'intermédiaire d'un moteur à courant continu, comportant les phases opératoires suivantes:

- on détermine une position instantanée de la porte;
- on régule la tension aux bornes du moteur à courant continu ou le courant parcourant les enroulements du moteur en fonction de la position instantanée déterminée,
- on répète, selon un pas de temps prédéterminé, ces deux phases opératoires pour commander le déplacement de la porte,

caractérisé en ce que, pour déterminer la position instantanée de la porte, on mesure la tension instantanée aux bornes du moteur, on mesure le courant instantané parcourant les enroulements du moteur, on calcule le déplacement de la porte effectué pendant le pas de temps en cours, en fonction des valeurs de tension et de courant instantanés mesurées et de valeurs connues de constante de force contre-électromotrice et de résistance interne du moteur, et on ajoute ce déplacement à la valeur de la position instantanée déterminée au cours du pas de temps précédent pour obtenir la position instantanée déterminée de la porte à la fin du pas de temps en cours.

Ainsi, on utilise toutes les informations données par le moteur pour effectuer la commande de la porte en déterminant la position de cette dernière sans utiliser d'instrument de détection ou de mesure supplémentaire. Bien que ce procédé aboutisse à des résultats moins précis que dans le cadre des dispositifs connus, cette précision n'étant pas nécessaire pour la commande de porte, il permet d'effectuer cette détermination de manière plus simple et beaucoup plus fiable.

Ce procédé trouve son utilisation plus particulièrement dans le cadre d'une commande par l'intermédiaire d'un moteur à courant continu à aimants permanents.

L'invention concerne, en outre, un dispositif pour la commande électronique d'ouverture et/ou de fermeture d'une porte par l'intermédiaire d'un moteur à courant continu pour la mise en oeuvre du procédé tel que décrit précédemment, comportant:

- des moyens de détermination d'une position instantanée de la porte;
- des moyens de régulation de la tension aux bornes du moteur à courant continu ou du courant parcourant les enroulements du moteur en fonction de la position instantanée déterminée,

    caractérisé en ce que les moyens de détermination de la position instantanée comportent des moyens de mesure de la tension instantanée aux bornes du moteur, des moyens de mesure du courant instantané parcourant les enroulements du moteur, des moyens de calcul du déplacement de la porte effectué pendant le pas de temps en cours, en fonction des valeurs de tension et de courant instantanés mesurées et de valeurs connues de constante de force contre-électromotrice et de résistance interne du moteur, et des moyens de sommation pour ajouter ce déplacement à la valeur de la position instantanée déterminée au cours du pas de temps précédent pour obtenir la position instantanée déterminée de la porte à la fin du pas de temps en cours.

L'invention concerne enfin une porte commandée électroniquement comportant au moins un vantail apte à être déplacé le long de moyens de guidage par des moyens d'entraînement mécaniques entrainés par un moteur à courant continu, caractérisée en ce qu'elle comporte un dispositif de commande tel que décrit précédemment.

Les autres caractéristiques de l'invention résulteront de la description qui suivra d'un mode de réalisation donnés uniquement à titre d'exemple et en se référant aux dessins annexés dans lesquels :

- la figure 1 est une représentation schématique d'une porte commandée suivant le procédé de commande selon l'invention ;

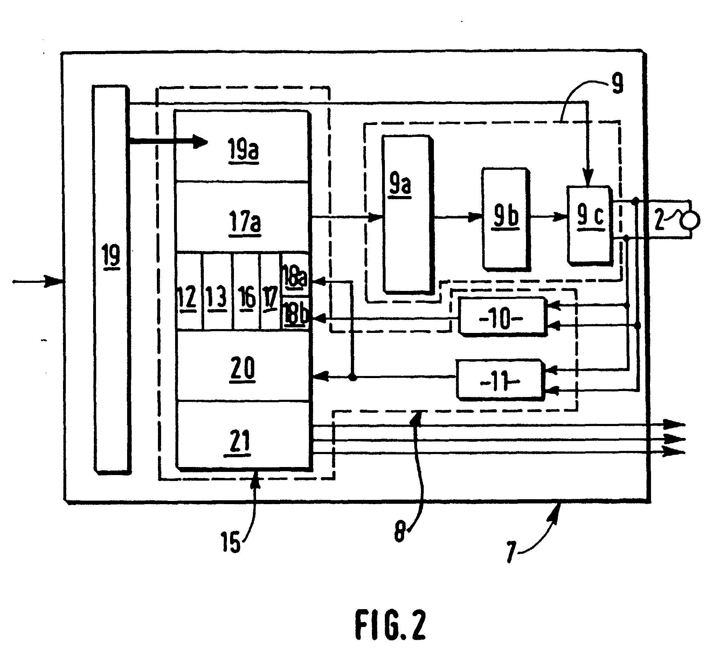

- la figure 2 est un synoptique d'un dispositif de commande selon l'invention ;
- la figure 3 est un schéma du circuit électronique du dispositif de la figure 1 ; et
- la figure 4 est une courbe représentant la vitesse de déplacement de la porte en fonction de la position instantanée déterminée, pour une étape complète d'ouverture.

Les éléments électroniques contenus dans le dispositif selon l'invention sont individuellement connus ou à la portée de l'homme du métier. Ils sont donc représentés sur les figures de manière schématique et ne seront pas décrits plus en détail.

Un procédé de commande selon l'invention est destiné à être utilisé pour la commande électronique d'ouverture et/ou de fermeture d'une porte 1 par l'intermédiaire d'un moteur à courant continu 2.

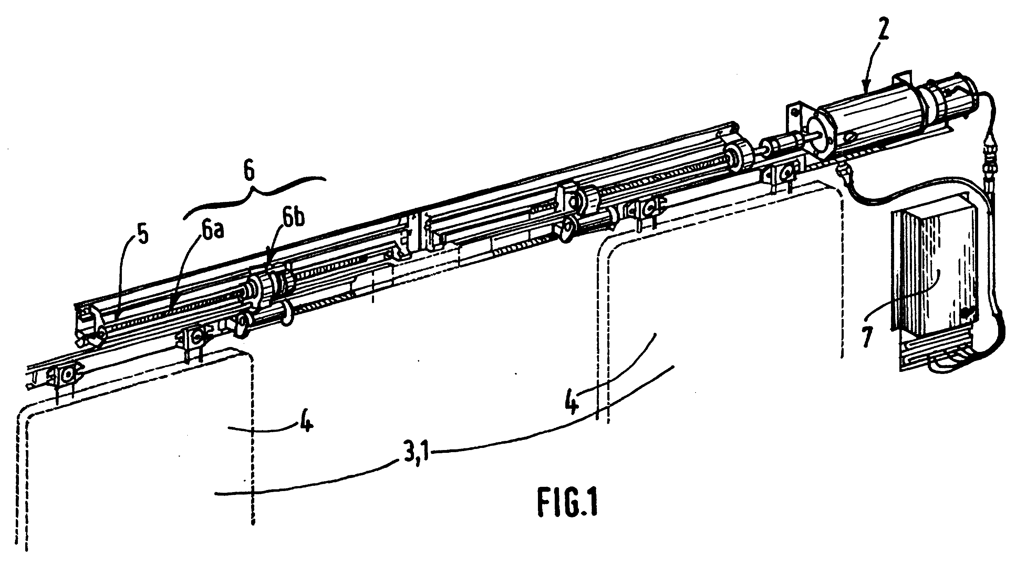

Dans l'exemple de réalisation représenté à la figure 1, on a choisi une porte électrique de matériel ferroviaire du type porte de métro comportant un panneau 3 constitué de deux vantaux 4 aptes à être déplacés le long de moyens de guidage 5 tels que des rails par exemple, par l'intermédiaire de moyens d'entraînement mécaniques 6, tels qu'un système vis 6a/écrou 6b, par exemple, entrainés par le moteur 2, les flèches représentées sur la figure 1 correspondant à la direction de déplacement des deux vanteaux 4 de la porte 1 l'un par rapport à l'autre.

Le procédé selon l'invention peut s'appliquer également à d'autres types de portes, telles que des portes de parking dont le panneau se déplace non plus transversalement, comme cela est représenté sur la figure 1, mais en rotation, le principe de la commande étant identique.

En outre, il est évident que l'on peut prévoir d'autres types de moyens de guidage 5 que des rails, dès lors qu'ils sont adaptés à la forme du panneau 3 de la porte 1.

Enfin, les moyens d'entraînement mécaniques sont ici un système Iris 6a/écrou 6b entraîné par l'arbre du moteur 2, liés aux vantaux 4 et provoquant le mouvement de ces derniers. Il est bien entendu que l'on peut prévoir d'autres types de moyens d'actionnement électromécaniques de configuration semblable.

Suivant le procédé selon l'invention, on utilise les caractéristiques électriques données par le moteur 2 afin de déterminer la position de la porte 1 à différents instants au cours d'une étape complète d'ouverture ou de fermeture de cette porte.

Dans la suite de la description, on utilise un moteur à courant continu à aimants permanents. Bien entendu, on peut appliquer l'invention à d'autres types de moteur à courant continu en utilisant des relations correspondantes.

Une fois que la position instantannée de la porte est déterminée, on régule la tension aux bornes du moteur 2 à courant continu ou le courant parcourant les enroulements du moteur en fonction de la position instantannée déterminée. On répète, selon un pas de temps prédéterminé, ces deux phases opératoires pour commander le déplacement de la porte 1.

Un ordre de grandeur de pas de temps, compte tenu de la vitesse de déplacement de la porte, est de quelques millisecondes.

Pour effectuer la détermination de la position de la porte, on utilise selon l'invention, la tension instantannée aux bornes du moteur et le courant instantanné parcourant les enroulements du moteur.

En effet, dans le cas d'un moteur à courant continu à aimants permanents, cette tension et ce courant répondent aux lois suivantes :

$$U = E + R.I \text{ avec } E = k_e.\omega \text{ et } C = k_c.I \qquad (1)$$

où :

- U est la tension moyenne instantannée aux bornes du moteur (en volt) ;
- E est la force contre-électromotrice instantannée (en volt)
- R est la résistance interne du moteur (en Ohm);
- I est le courant instantanné traversant le moteur (en ampère) ;
- $k_e$ est la constante de la force contre-électromotrice du moteur, connue et donnée par le fournisseur (en volt/(radian/seconde)) ;
- $\omega$ est la vitesse de rotation de l'arbre moteur (en radian/seconde) ;
- C est le couple fourni par le moteur (en newton. mètre) ; et
- $k_c$ est le coefficient du couple du moteur, connu et donné par le fournisseur (en newton.mètre/ampère), $k_e = k_c$.

Ainsi, dans un pas de temps prédéterminé, on peut calculer le déplacement de la porte effectué pendant ce pas de temps en cours, en fonction des valeurs de tension et de courant instantannés mesurées et des valeurs connues de constantes de forces contre-électromotrices et de résistance interne du moteur, et ce de la manière suivante :

$$\Delta x = a/k_e \text{ ' } E\Delta t \qquad (2)$$

où a est le rapport entre la vitesse angulaire de rotation de l'arbre moteur et la vitesse linéaire de déplacement de la porte, a est constante, et où $\Delta t$ est la valeur du pas de temps prédéterminé.

Il suffit alors d'ajouter ce déplacement $\Delta x$ à la valeur de la position instantannée déterminée au cours du pas de temps précédent pour obtenir la position instantannée déterminée de la porte à la fin du pas de temps en cours.

On répète ensuite ce pas de temps jusqu'à obtenir le déplacement de la porte correspondant à une étape complète de fermeture ou d'ouverture.

Pour plus de sécurité, il peut être parfois nécessaire d'imposer un gabarit de processus spécifique au déplacement de la porte lors de l'étape de l'ouverture ou lors de l'étape de la fermeture.

En effet, le processus spécifique peut correspondre, par exemple, à un mouvement de la porte 1 comprenant deux étapes :

1) Le panneau 3 est complètement ouvert et est mis en mouvement à grande vitesse jusqu'à une position intermédiaire correspondant à une porte, par exemple, aux deux tiers fermée.

2) Le panneau 3 est entraîné à vitesse lente jusqu'à ce que la porte 1 soit complètement fermée, les deux vantaux 4 étant en contact l'un contre l'autre.

De la même manière, dans la phase d'ouverture, on peut prévoir les deux étapes suivantes :

1) Le panneau 3 est complètement fermé et est mis en mouvement à grande vitesse jusqu'à une position intermédiaire correspondant à une porte, par exemple, aux deux tiers ouverte.

2) Le panneau 3 est entraîné à vitesse lente jusqu'à ce que la porte soit complètement ouverte.

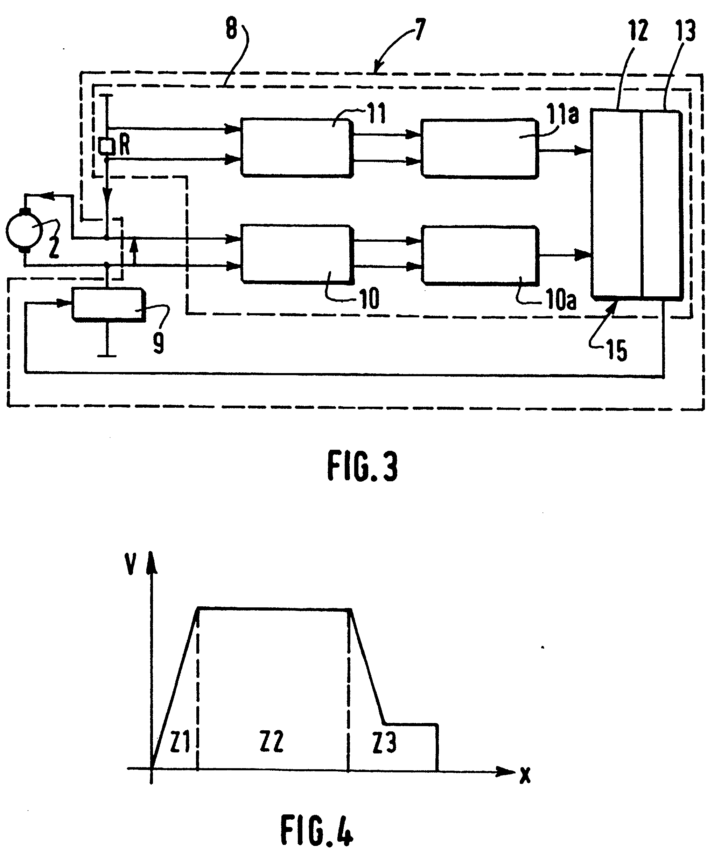

On définit ainsi dans une étape complète de fermeture ou d'ouverture de la porte 1 des zones de déplacement Z1, Z2 et Z3 telles que représentées à la figure 4.

Dans le cas de l'exemple représenté, une première zone Z1 correspond à la zone d'accélération jusqu'à la grande vitesse où le moteur délivre un surcouple, une seconde zone Z2 correspond à une zone de décélération jusqu'à une vitesse constante où le courant correspond à un courant nominal, et une troisième zone Z3 correspondant à une zone de décélération à une petite vitesse où le courant est un courant également nominal lorsque la porte est à la petite vitesse.

Pour obtenir une étape de fermeture ou d'ouverture de ce type, on compare la valeur de la position instantannée déterminée de la porte 1 à au moins une valeur prédéterminée, on détermine en fonction du résultat de cette comparaison une zone de déplacement dans laquelle se trouve la porte, et on régule la tension aux bornes du moteur ou le courant parcourant les enroulements du moteur à une valeur correspondant à cette zone de déplacement.

Par exemple, si au cours de la détermination de la position instantannée de la porte, on se situe dans la zone Z2, la régulation de la tension aux bornes du moteur correspond en fait à un maintien de la tension déjà présente aux bornes du moteur.

D'autre part, bien que les paramètres de résistance R interne du moteur et de constante $k_e$ de force contre-électromotrice du moteur soient donnés pour chaque série de moteur par le fournisseur, ces paramètres peuvent varier, dans le cas d'un moteur à aimants permanents, avec la température interne du moteur et varient également d'un moteur à l'autre du fait de leurs tolérances de fabrication.

Pour éviter des erreurs sur ces paramètres, on peut prévoir d'effectuer un apprentissage en fonction des différentes valeurs mesurées ou déterminées lors du pas de temps prédéterminé, et surtout lors d'une étape complète d'ouverture ou de fermeture.

Pour l'apprentissage sur la résistance interne du moteur R, on prend comme référence le moteur bloqué. Dans ce cas, le courant est à valeur maximale (couple maximum). le moteur est sous tension, mais la vitesse angulaire est nulle. On obtient donc :

$$R = U/I \qquad (3)$$

car $E = 0$

où U et I sont connus puisque mesurés.

On maintient donc ce blocage du moteur sous tension pendant un certain temps de manière à pouvoir effectuer les mesures et on détermine ainsi la résistance interne du moteur à la fin de chaque étape complète d'ouverture ou de fermeture de la porte 1. On mémorise ensuite chaque valeur calculée de manière à pouvoir effectuer un moyennage, et ainsi un lissage d'erreur de calcul.

S'agissant de l'apprentissage sur la constante $k_e$ de force contre-électromotrice du moteur, on prend comme référence la course complète de la porte dans une étape d'ouverture ou de fermeture. En effet, lors de chaque ouverture ou fermeture, la position instantannée de la porte est déterminée ainsi que sa course. Or, la course du panneau 3 de la porte 1 est connue, puisque c'est la course maximale et est notée $X_0$. On en déduit :

$$k_e = a/X_0 \int E \, dt \qquad (4)$$

A partir de l'intégral calculée sur toute la course en ouverture ou en fermeture, on calcule le coefficient $k_e$.

Pour l'apprentissage de ces deux paramètres R et $k_e$, on peut prévoir de prendre au démarrage par défaut la valeur donnée par le fabriquant. Mais on peut également prévoir d'effectuer une étape d'ouverture ou de fermeture à vide de manière à pouvoir définir ces valeurs de manière plus précise dès le départ.

Pour la mise en oeuvre du procédé selon l'invention, on utilise un dispositif 7 de commande comportant :

- des moyens de détermination 8 d'une position instantannée de la porte ; et
- des moyens de régulation 9 de la tension aux bornes du moteur à courant continu ou du courant parcourant les enroulements du moteur en fonction de la position instantannée déterminée.

Les moyens de régulation 9 comportent par exemple un circuit 9a de régulation de tension et de courant, un circuit 9b de commande du moteur 2 et un circuit 9c destiné à commander le sens de rotation du moteur 2.

Selon l'invention, les moyens de détermination 8 de la position instantannée comportent des moyens de mesure 10 de la tension instantannée aux bornes du moteur, des moyens de mesure 11 du courant instantanné parcourant les enroulements du moteur, des moyens de calcul 12 du déplacement de la porte effectué pendant le pas de temps en cours, en fonction des valeurs de tension et de courant instantannés mesurées et des valeurs connues de constantes de forces contre-électromotrices et de résistance interne du moteur, et des moyens de sommation 13 pour ajouter ce déplacement à la valeur de la position instantannée déterminée au cours du pas de temps précédent pour obtenir la position instantannée déterminée de la porte à la fin du pas de temps en cours.

La mesure du courant s'effectue par l'intermédiaire d'une résistance R de mesure branchée en série avec le moteur, et les signaux de sortie des moyens de mesure 10 et 11 sont traités classiquement par des moyens de traitements analogiques 10a et 11a avant d'être envoyés dans le microprocesseur 15 comportant notamment les moyens de calcul 12 et les moyens de sommation 13.

Pour pouvoir mettre en oeuvre le processus spécifique décrit précédemment, le dispositif de commande 7 comporte, en outre, des moyens de comparaison 16 de la valeur de la position instantanée déterminée de la porte à au moins une valeur prédéterminée, des moyens de détermination 17, en fonction du résultat de cette comparaison, d'une zone de déplacement dans laquelle se trouve la porte, et des moyens de régulation 17a de la tension ou du courant parcourant les enroulements du moteur à une valeur correspondant à cette zone de déplacement.

Les moyens de régulation 17a peuvent servir, en outre, à la régulation systématique de la tension aux bornes du moteur, ou du courant.

En outre, pour l'apprentissage sur R et $k_e$, le dispositif 7 comporte des premiers moyens d'apprentissage 18b sur la résistance interne du moteur en fonction des valeurs de tension et de courant instantanés mesurées, en situation moteur bloqué à la fin de chaque étape d'ouverture ou de fermeture et des deuxièmes moyens d'apprentissage 18a sur la constante de force contre-électromotrice du moteur en fonction des valeurs de tension et de courant instantanés mesurées pour chaque pas de temps, au cours d'une étape complète de fermeture ou d'ouverture, et de la course totale prédéterminée de la porte.

Enfin, le dispositif 7 comporte en outre, de manière connue, les éléments suivants :

- un circuit 19 de protection des entrées ;
- un circuit 19a de traitement des entrées ;
- un circuit 20 de gestion de détection d'obstacles sur le trajet de la porte ; et
- un circuit 21 de traitement des sorties telles que la signalisation, la maintenance.

L'invention concerne enfin la porte 1 comportant un dispositif 7 tel que décrit précédemment et plus particulièrement dans lequel le moteur 2 est un moteur à courant continu à aimants pemanents.

**Revendications**

1. Procédé de commande électronique d'ouverture et/ou de fermeture d'une porte (1) par l'intermédiaire d'un moteur à courant continu (2), comportant les phases opératoires suivantes:

   - on détermine une position instantanée de la porte (1) ;
   - on régule la tension aux bornes du moteur à courant continu (2) ou le courant parcourant les enroulements du moteur en fonction de la position instantanée déterminée,
   - on répète, selon un pas de temps prédéterminé, ces deux phases opératoires pour commander le déplacement de la porte (1),

   caractérisé en ce que, pour déterminer la position instantanée de la porte (1), on mesure la tension instantanée aux bornes du moteur (2), on mesure le courant instantané parcourant les enroulements du moteur (2), on calcule le déplacement de la porte (1) effectué pendant le pas de temps en cours, en fonction des valeurs de tension et de courant instantanés mesurées et de valeurs connues de constante de force contre-électromotrice ($k_e$) et

de résistance interne (R) du moteur (2), et on ajoute ce déplacement à la valeur de la position instantanée déterminée au cours du pas de temps précédent pour obtenir la position instantanée déterminée de la porte (1) à la fin du pas de temps en cours.

2. Procédé selon la revendication 1, caractérisé en ce que l'on compare la valeur de la position instantanée déterminée de la porte (1) à au moins une valeur prédéterminée, on détermine, en fonction du résultat de cette comparaison une zone de déplacement (Z1, Z2, Z3) dans laquelle se trouve la porte (1), et on régule la tension ou le courant à une valeur correspondant à cette zone de déplacement (Z1, Z2, Z3).

3. Procédé selon la revendication 1 ou 2, le moteur à courant continu (2) étant un moteur à aimants permanents, caractérisé en ce que l'on effectue un apprentissage sur la résistance interne (R) du moteur en fonction des valeurs de tension et de courant instantanés mesurées, en situation moteur bloqué à la fin de chaque étape d'ouverture ou de fermeture.

4. Procédé selon l'une quelconque des revendications 1 à 3, le moteur à courant continu (2) étant un moteur à aimants permanents, caractérisé en ce que l'on effectue un apprentissage sur la constante de force contre-électromotrice ($k_e$) du moteur en fonction des valeurs de tension et de courant instantanés mesurées pour chaque pas de temps, au cours d'une étape complète de fermeture ou d'ouverture, et de la course prédéterminée totale de la porte.

5. Dispositif pour la commande électronique d'ouverture et/ou de fermeture d'une porte (1) par l'intermédiaire d'un moteur à courant continu, pour la mise en oeuvre du procédé selon l'une quelconque des revendications 1 à 4, comportant:

   - des moyens de détermination (8) d'une position instantanée de la porte (1);
   - des moyens de régulation (9) de la tension aux bornes du moteur à courant continu ou du courant parcourant les enroulements du moteur en fonction de la position instantanée déterminée,

   caractérisé en ce que les moyens de détermination (8) de la position instantanée comportent des moyens de mesure (10) de la tension instantanée aux bornes du moteur, des moyens de mesure (11) du courant instantané parcourant les enroulements du moteur, des moyens de calcul (12) du déplacement de la porte (1) effectué pendant le pas de temps en cours, en fonction des valeurs de tension et de courant instantanés mesurées et des valeurs connues de constante de force contre-électromotrice et de résistance interne du moteur, et des moyens de sommation (13) pour ajouter ce déplacement à la valeur de la position instantanée déterminée au cours du pas de temps précédent pour obtenir la position instantanée déterminée de la porte (1) à la fin du pas de temps en cours.

6. Dispositif selon la revendication 5, caractérisé en ce qu'il comporte, en outre, des moyens de comparaison (16) de la valeur de la position instantanée déterminée de la porte (1) à au moins une valeur prédéterminée, des moyens de détermination (17), en fonction du résultat de cette comparaison, d'une zone de déplacement dans laquelle se trouve la porte, et des moyens de régulation (17a) de la tension ou du courant à une valeur correspondant à cette zone de déplacement.

7. Dispositif selon la revendication 5 ou 6, le moteur à courant continu étant un moteur à aimants permanents, caractérisé en ce qu'il comporte, en outre, des premiers moyens d'apprentissage (18b) sur la résistance interne (R) du moteur (2) en fonction des valeurs de tension et de courant instantanés mesurées, en situation moteur bloqué à la fin de chaque étape d'ouverture ou de fermeture.

8. Dispositif selon l'une quelconque des revendications 5 à 7, le moteur à courant continu étant un moteur à aimants permanents, caractérisé en ce qu'il comporte, en outre, des deuxiemes moyens d'apprentissage (18a) sur la constante de force contre-électromotrice du moteur en fonction des valeurs de tension et de courant instantanés mesurées pour chaque pas de temps, au cours d'une étape complète de fermeture ou d'ouverture, et de la course prédéterminée totale de la porte.

9. Porte (1) commandée électroniquement comportant au moins un vantail (4) apte à être déplacé le long de moyens de guidage (5) par des moyens d'entraînement mécaniques (6) entrainés par un moteur à courant continu (2), caractérisée en ce qu'elle comporte un dispositif de commande (7) selon l'une quelconque des revendications 6 à 8.

10. Porte (1) selon la revendication 9, caractérisé en ce que le moteur (2) est un moteur à courant continu à aimants permanents.

**Patentansprüche**

1. Verfahren zum elektronisch gesteuerten Öffnen bzw. Schließen einer Tür (1) mit einem Gleichstrommotor (2) in folgenden Arbeitsschritten:

   - Bestimmung der gegenwärtigen Stellung der Tür (1),

   - Regulierung der Spannung an den Klemmen des Gleichstrommotors (2) oder der Stromstärke in den Wicklungen des Motors entsprechend der gegenwärtig bestimmten Türstellung,
   - Wiederholung der beiden obengenannten Arbeitsschritte in vorgegebenen Intervallen zum Verändern der Stellung der Tür (1),

   **dadurch gekennzeichnet, daß** zur Bestimmung der gegenwärtigen Stellung der Tür (1) die Spannung an den Klemmen des Gleichstrommotors (2) bzw. die gegenwärtige Stromstärke in den Wicklungen des Motors (2) gemessen und die Veränderung der Stellung der Tür (1) in der jeweiligen Zeitspanne je nach den gegenwärtig gemessenen Spannungs- und Stromstärkewerten sowie von bekannten, gegen die Kraft des E-Motors ($k_e$) wirkenden Kraftkonstanten und des Innenwiderstandes (R) des Motors (2) berechnet und der Wert der Positionsänderung der Tür dem Wert der gegenwärtigen Stellung der Tür (1) während der vorhergehenden Zeitspanne hinzugefügt wird, um daraus den Wert für die gegenwärtige Stellung der Tür (1) am Ende der gegenwärtigen Zeitspanne zu erhalten.

2. Verfahren nach Patentanspruch 1, **dadurch gekennzeichnet, daß** der Wert der gegenwärtigen Stellung der Tür (1) mit mindestens einem vorgegebenen Wert verglichen und anhand des Ergebnisses dieses Vergleichs ein Verstellweg (Z1, Z2, Z3) bestimmt wird, in dem sich die Tür befindet, worauf die Spannung bzw. die Stromstärke auf den Wert reguliert wird, der diesem Verstellweg (Z1, Z2, Z3) entspricht.

3. Verfahren nach Patentanspruch 1 oder 2, wobei der Gleichstrommotor (2) ein Dauermagnetmotor ist, dadurch gekennzeichnet, daß ein Lernprogramm über den Innenwiderstand (R) des Motors anhand der gemessenen Augenblickswerte für Spannung bzw. Stromstärke in einer Situation durchgeführt wird, in der der Motor am Ende einer Türöffnung oder Türschließung blockiert ist.

4. Verfahren nach einem der Patentansprüche 1 bis 3, wobei der Gleichstrommotor (2) ein Dauermagnetmotor ist, dadurch gekennzeichnet, daß ein Lernprogramm über die gegen die Kraft des E-Motors ($k_e$) wirkenden Kraftkonstante $k_e$ anhand der im Laufe einer vollständigen Türöffnung oder Türschließung für jeden einzelnen Zeitabschnitt gemessenen Augenblickswerte für Spannung bzw. Stromstärke und den vorgegebenen Gesamtweg der Tür durchgeführt wird.

5. Vorrichtung zum elektronisch gesteuerten Öffnen bzw. Schließen einer Tür (1) mit einem Gleichstrommotor (2) zur Anwendung des Verfahrens nach einem der Patentansprüche 1 bis 4 mit

- Mitteln (8) zur Bestimmung der gegenwärtigen Stellung der Tür (1),
- Mitteln (9) zur Regulierung der Spannung an den Klemmen des Gleichstrommotors (2) oder der Stromstärke in den Wicklungen des Motors entsprechend der gegenwärtig bestimmten Türstellung,

**dadurch gekennzeichnet, daß** die Mittel (8) zur Bestimmung der gegenwärtigen Türstellung Mittel (10) zum Messen der gegenwärtigen Spannung an den Klemmen des Gleichstrommotors (2) bzw. Mittel (11) zum Messen der gegenwärtigen Stromstärke in den Wicklungen des Motors (2) sowie Mittel zum Berechnen der Veränderung der Stellung der Tür (1) in der jeweiligen Zeitspanne je nach den gegenwärtig gemessenen Spannungs- und Stromstärkewerten sowie von bekannten, gegen die Kraft des E-Motors wirkenden Kraftkonstanten und des Innenwiderstandes des Motors und Mittel zum Summieren (13) besitzt, mit denen der Wert der Positionsänderung der Tür dem Wert der gegenwärtigen Stellung der Tür (1) während der vorhergehenden Zeitspanne hinzugefügt wird, um daraus den Wert für die gegenwärtige Stellung der Tür (1) am Ende der gegenwärtigen Zeitspanne zu erhalten.

6. Vorrichtung nach Patentanspruch 5, dadurch gekennzeichnet, daß sie weiterhin Mittel zum Vergleichen (16) des Wertes der gegenwärtigen Stellung der Tür (1) mit mindestens einem vorgegebenen Wert, Mittel (17) zum Bestimmen - anhand des Ergebnisses dieses Vergleichs - eines Verstellwegs, in dem sich die Tür befindet, sowie Reguliermittel (17a) besitzt, mit denen die Spannung bzw. die Stromstärke auf den Wert reguliert wird, der diesem Verstellweg entspricht.

7. Vorrichtung nach Patentanspruch 5 oder 6, wobei der Gleichstrommotor (2) ein Dauermagnetmotor ist, dadurch gekennzeichnet, daß sie weiterhin erste Mittel (18b) zur Durchführung eines Lernprogramms über den Innenwiderstand (R) des Motors anhand der gemessenen Augenblickswerte für Spannung bzw. Stromstärke in einer Situation besitzt, in der der Motor am Ende einer Türöffnung oder Türschließung blockiert ist.

8. Vorrichtung nach Patentanspruch 5 bis 7, wobei der Gleichstrommotor ein Dauermagnetmotor ist, dadurch gekennzeichnet, daß sie weiterhin zweite Mittel (18a) zur Durchführung eines Lernprogramms über die gegen die Kraft des E-Motors wirkenden Kraftkonstante anhand der im Laufe einer vollständigen Türöffnung oder Türschließung für jeden einzelnen Zeitabschnitt gemessenen Augenblickswerte für Spannung bzw. Stromstärke und den vorgegebenen Gesamtweg der Tür besitzt.

9. Elektronisch gesteuerte Tür (1) mit mindestens einem Türflügel (4), der sich aufgrund von mit einem Gleichstrommotor (2) angetriebenen mechanischen Antriebsmitteln (6) an Führungsmitteln (5) entlangbewegen kann, dadurch gekennzeichnet, daß sie eine Steuervorrichtung (6) nach einem der Patentansprüche 6 bis 8 besitzt.

10. Tür (1) nach Patentanspruch 9, dadurch gekennzeichnet, daß der Motor (2) ein Gleichstrommotor mit Dauermagneten ist.

## Claims

1. A method for the electronic control of the opening and/or closing of a door (1) by means of a DC motor (2), including the following operating phases:

- an instantaneous position of the door (1) is determined;

- the voltage at the terminals of the DC motor (2) or the current passing through the motor windings is regulated as a function of the instantaneous position determined,

- these two operating phases are repeated, in predetermined time steps, in order to control the movement of the door (1),

characterised in that, in order to determine the instantaneous position of the door (1), the instantaneous voltage at the terminals of the motor (2) is measured, the instantaneous current passing through the windings of the motor (2) is measured, the movement of the door (1) made during the current time step is calculated, as a function of the instantaneous voltage and current values measured and known values of the back-electromotive force constant ($k_e$) and internal resistance (R) of the motor (2), and this movement is added to the value of the instantaneous position determined during the previous time step in order to obtain the determined instantaneous position of the door (1) at the end of the current time step.

2. A method according to Claim 1, characterised in that the value of the determined instantaneous position of the door (1) is compared with at least one predetermined value, a movement zone (Z1, Z2, Z3) in which the door (1) is situated is determined according to the result of this comparison, and the voltage or current is regulated at a value corresponding to this movement zone (Z1, Z2, Z3).

3. A method according to Claim 1 or 2, the DC motor (2) being a permanent-magnet motor, characterised in that learning is carried out with regard to the internal resistance (R) of the motor according to the instantaneous voltage and current values measured, in a situation with the motor locked at the end of each opening or closing step.

4. A method according to any one of Claims 1 to 3, the DC motor (2) being a permanent-magnet motor, characterised in that learning is carried out with regard to the back-electromotive force constant ($k_e$) of the motor as a function of the instantaneous voltage and current values measured for each time step, during a complete step of opening or closing, and the predetermined total travel of the door.

5. A device for the electronic control of the opening and/or closing of a door (1) by means of a DC motor, for implementing the method according to any one of Claims 1 to 4, having:

   - means (8) of determining an instantaneous position of the door (1);

   - means (9) of regulating the voltage at the terminals of the DC motor or the current passing through the windings of the motor according to the instantaneous position determined,

   characterised in that the means (8) of determining the instantaneous position include means (10) of measuring the instantaneous voltage at the terminals of the motor, means (11) of measuring the instantaneous current passing through the windings of the motor, means (12) of calculating the movement of the door (1) made during the current time step, as a function of the instantaneous voltage and current values measured and the known values of the back-electromotive force constant and internal resistance of the motor, and adding means (13) for adding this movement to the value of the instantaneous position determined during the previous time step in order to obtain the determined instantaneous position of the door (1) at the end of the current time step.

6. A device according to Claim 5, characterised in that it also has means (16) of comparing the value of the determined instantaneous position of the door (1) with at least one predetermined value, means (17) of determining, according to the result of this comparison, a movement zone in which the door is situated, and means (17a) of regulating the voltage and current at a value corresponding to this movement zone.

7. A device according to Claim 5 or 6, the DC motor being a permanent-magnet motor, characterised in that it also has first means (18b) of learning with respect to the internal resistance (R) of the motor (2) as a function of the instantaneous voltage and current values measured, in the situation with the motor blocked at the end of each opening and closing step.

8. A device according to any one of Claims 5 to 7, the DC motor being a permanent-magnet motor, characterised in that it also has second means of learning (18a) with respect to the back-electromotive force constant of the motor as a function of the instantaneous voltage and current values measured for each time step, during a complete step of opening and closing, and the total predetermined travel of the door.

9. An electronically controlled door (1) having at least one leaf (4) able to be moved along guidance means (5) by mechanical driving means (6) driven by a DC motor (2), characterised in that it has a control device (7) according to any one of Claims 6 to 8.

10. A door (1) according to Claim 9, characterised in that the motor (2) is a permanent-magnet DC motor.

FIG.1

EP 0 744 679 B1

**FIG.2**

FIG. 3

FIG. 4